# EUROPEAN PATENT SPECIFICATION

(11) **EP 0 914 720 B1**
(45) Date of publication and mention of the grant of the patent: **17.10.2007**
(21) Application number: 97935954.4
(22) Date of filing: 19.08.1997
(51) Int. Cl.: H04B 1/59

(54) **INFORMATION LINK**
INFORMATIONSVERBINDUNG
LIAISON DE DONNEES

(30) Priority: 19.08.1996 SE 9603026
(43) Date of publication of application: 12.05.1999
(73) Proprietor: Tagmaster AB, 164 40 Kista (SE)
(72) Inventor: GUNNARSSON, Staffan, S-165 77 Hässelby (SE)
(74) Representative: Örtenblad, Bertil Tore
(86) International application number: PCT/SE1997/001360
(87) International publication number: WO 1998/008311

(56) References cited:
- GB-A- 2 268 031
- US-A- 5 218 343
- US-A- 5 355 521

## Description

A system for transmitting information between communications units and/or transponders, where, e.g., a portable communications units includes circuits for wireless communication with both transponders and with stationary communications units.

### BACKGROUND OF THE INVENTION

Microwave transponders are used in many connections in which automatic identification must take place up to a distance of some metres and where other technology is unsuitable due to dirt, disturbances, interference, available time, etc. The transponders deliver their data by forming information sidebands on one side or on both sides of an incident microwave signal from a communications unit, without further energy being supplied from the transponder. Such wireless transponders have a typical reading range of some few metres and are used in factory automation, logistic flows and in entrances to control the entry of motor vehicles and people.

The transmission technology is well described in the literature, e.g. in patent specifications claiming priority from 1975 for instance. The communications unit may be a read-type unit, i.e. designed solely to receive data from transponders, or a read/write-type, i.e. designed to also write new data into the transponders via a coded microwave signal.

GB 2 268 031 and US 5,355,521 both show such systems of communicating between a transmitter/receiver and a transponder.

One problem with the aforedescribed applications is that the communications unit is of the stationary and out of range of the transponder when it is necessary to read the transponder, e.g. when the transponder is located between two working stations in a factory on the occasion of a stop in production. Other examples include reading transponders on freight in harbours, in airports, in distribution centres, etc., or reading of person-carried transponders in person controllers, e.g. at athletic meetings. One known solution to this problem is to provide a battery-powered mobile communications unit constructed in a manner similar to a mobile telephone, for instance.

Such a portable communications unit is able to store temporarily data from several different transponders for later transmission of this data to a central computer. The portable communications unit is also able to store temporarily data from the central computer intended to be programmed into the transponders. Communication between the central computer and a communications unit is normally achieved through the medium of a temporarily connected data line, e.g. an RS 232 line. This connection is inconvenient and time-consuming, and its reliability in operation is impaired by the risk that a loose contact may occur.

An advantageous solution to the problem of data transmission with different communications units and a central computer has been described in Swedish Patent Application No. SE9200941-5, where microwaves are used both for transponder communication and for communication between communications units, wherewith wireless transmission can be achieved quickly and reliably.

### THE MOST ESSENTIAL CHARACTERISTIC FEATURES OF THE INVENTION

One problem with the described technology, however, is that separate circuits are required in the communications unit for enabling the achievement of said wireless transmission, while, at the same time, the maximum effective range that can be achieved is not always necessary. A transmission range of some few metres would often be sufficient, i.e. the same range as the distance between transponder and communication unit would suffice for the transmission of data between the portable communications unit and the stationary communications unit connected to a central computer.

If it were possible to hold the portable communications unit adjacent the stationary communications unit in order to transfer data in either direction and without needing to connect the unit physically to an electrical contact, there would be obtained a very useful information system, particularly if costs were low.

The problem is solved by the present invention by utilizing the same technology for communication between the portable and the stationary communications unit as that applied when a communications unit reads a transponder. Thus, the communications units include very little specific electronics for said data transmission.

By varying the impedance experienced from another communications unit via the antenna system of the communications units in accordance with a pattern that corresponds to the transmitted data stream, information sidebands are generated in the same way as when the transponder is read in a known manner. This variation in impedance may, for instance, be achieved by switching on and off one of the modulation circuits. These modulation circuits are often found in connection with the antenna system of the communications unit and are, e.g., intended to modulate the carrier wave for writing data into the transponder, to attenuate the input signal in order to reduce any interference, or to lower the power of the microwave signal in order to reduce the range of the communications unit in certain cases.

If one of these functions is implemented as a so-called reflective type diode attenuator, the communications unit will behave in the field of another communications unit as a transponder while generating information sidebands, provided that corresponding attenuators are controlled with a signal that corresponds to the data stream to be transferred.

The invention can be applied without transponders in certain applications. For instance, the portable unit can be used to collect data by keying through a keypad, via a bar code reader or like connected thereto.

In other applications, it may be beneficial to establish communication between portable communications units where data from one group of portable units is caused to transfer information to another portable unit, particularly to a portable data collecting unit, which is later transported to a central transfer site at which the collected data is transferred to a central computer. This application is particularly beneficial when a number of people are in when a number of people are involved in the data collection at a place which is distanced geographically from the central computer, and where the data in the portable communications unit is transferred to a separate portable communications unit that is then transported to the central computer. This avoids the necessity of transporting all of the portable units.

The inventive system can be described as a system for the wireless transmission of information between at least two communications units that include microwave transmitters, where the information delivering communications unit, on the basis of the data stream to be delivered, by modulation of a microwave signal incident from the information receiving communications unit, generates and delivers information sidebands on one or both sides of said microwave signal, and where the information receiving communications unit receives said information sideband and rebuilds the delivered data stream by mixing at least one of these information sidebands with the microwave signal transmitted by itself.

The invention is characterized by the features in the characterizing portion of claim 1.

Some of the communications units may be portable and selfpowered, within the scope of the present invention.

### DESCRIPTION OF PREFERRED EMBODIMENTS

The invention will now be described in detail with reference to the accompanying drawings, in which
Figure 1 illustrates a system that includes a transponder and a portable and a stationary communications unit;
Figure 2 illustrates a portable communications unit that includes a transponder;
Figure 3 illustrates a stationary communications unit that includes a portable communications unit; and
Figure 4 illustrates information sidebands.

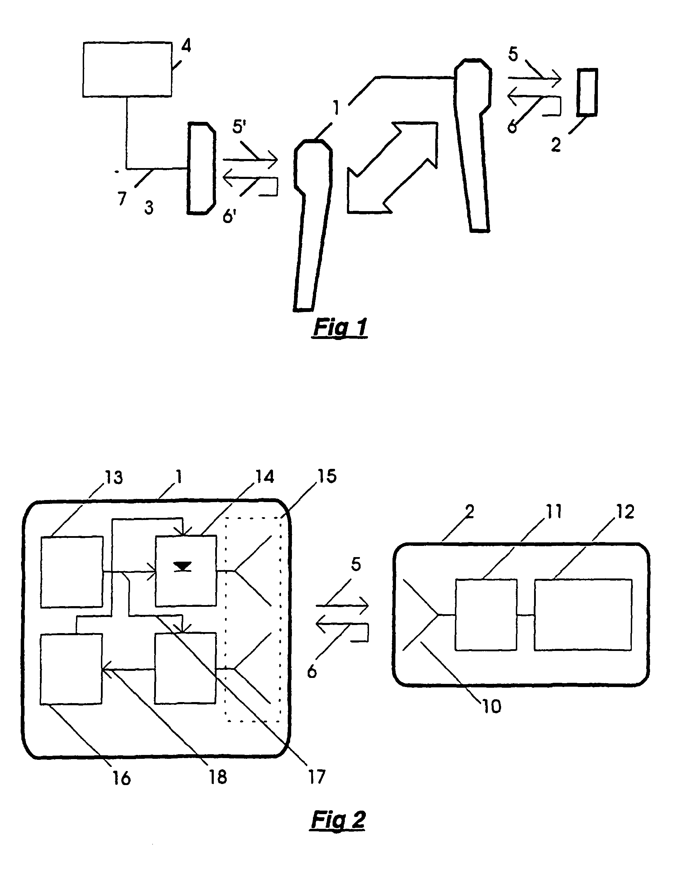

Figure 1 illustrates how a portable communications unit 1 communicates with a transponder 2 and also with a stationary communications unit 3 that is connected to a central computer 4.

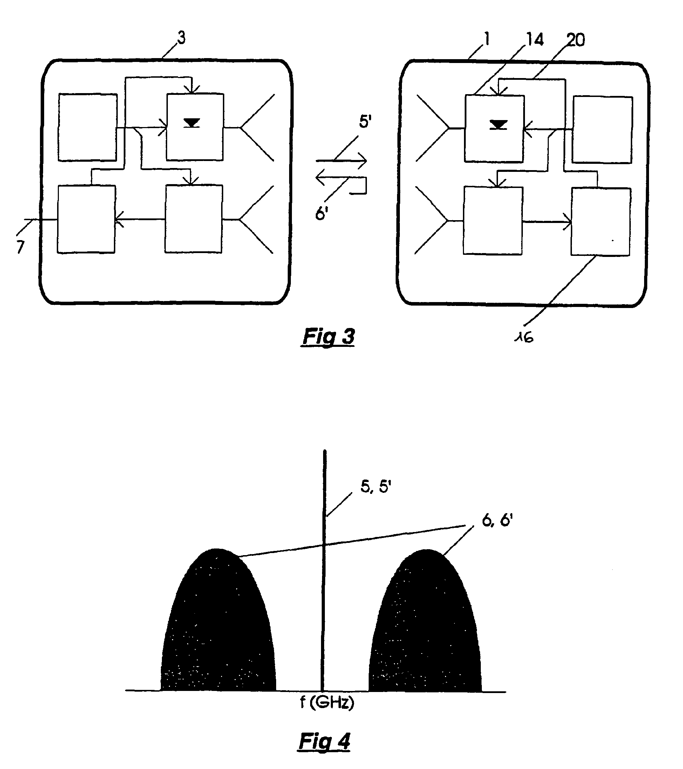

When the portable unit 1 is to read the transponder 2, a microwave signal 5 is transmitted, this signal also being shown as a spectrum signal 5 in the frequency diagram shown in Figure 4. The transponder modulates the incident signal 5 with data in a known manner, such as to form information sidebands (6, 6' in Figure 4) which are reflected from the transponder and captured and decoded in the portable unit 1, and stored intermediately in its memory, for instance.

Figure 1 also shows how the information can be transferred between the stationary communications unit 3 and the portable communications unit 1 in accordance with the same principle. The stationary unit transmits a microwave signal 5' and receives data via information sidebands 6' from the portable unit, in order to forward this data to the central computer 4 for instance via a serial connection 7.

Figure 2 illustrates the transponder and portable communications unit in more detail, where the transponder antenna system 10 receives the signal 5 and forwards the signal to the modulation circuits 11 in the transponder. The modulation circuits 11 receive a data stream from the memory/register 12 of the transponder and therewith form information sidebands 6 that are reflected out through said antenna system 10.

The communications unit includes a microwave oscillator 13 which operates at 2.45 GHz for instance, and which delivers its signal partly via the modulation circuit 14 for forwarding to the transponder 2 as the signal 5 via the antenna system 15. The modulation circuit 14 is constantly open when reading the transponder, i.e. it allows through the signal arriving from the oscillator 13.

When writing data into the transponder, the modulation circuit 14 is controlled with a bit stream from the processor/memory 16 of the unit that corresponds to the data to be transferred to the transponder, the modulation circuits 11 of which function in this case as detection circuits for entering the bit stream into the memory/register 12.

The portable communications unit receives the information sideband 6 via its antenna system 15 and mixes these sidebands with a branch-off 17 of the signal 5 transmitted by the oscillator 13, so that the data stream from the memory/register 12 and originating from the transponder is recreated for interpretation and intermediate storage in the processor/memory 16.

Figure 3 is a more detailed illustration of the transmission of data from the portable unit 1 to the stationary unit 3. This function is reciprocal, i.e. the transmission can also take place in the other direction as a result of the symmetry, e.g. to transfer data from a central processor or computer to the transponders.

By now controlling the modulation circuits 14 of the portable communications unit from the processor/memory 16 with earlier received transponder data via the signal 20, an incident microwave signal 5' from the stationary unit will sometimes be reflected and sometimes be absorbed in the modulator when the modulator is of the kind that changes its impedance in dependence on the status of the signal 20 and thus form a sideband signal 6' analogously with the function of a transponder. Alternatively, the modulator 14 may influence the phase of the reflective signal 6', or provide a combination of phase and amplitude modulation. Thus, the portable unit need not be switched-on when transmitting data from the portable unit to the stationary unit, because the unit will function as a reflecting transponder from a microwave aspect.

The function of the stationary unit 3 is analogous with the function of the earlier described portable unit 1, and need not therefore be described here. The data read from the portable unit may be forwarded to the central computer 4 via the serial connection 7.

The described modulator 14 need not be in combination with any of the standard function blocks of the communications unit, as described here for instance with its amplitude modulator or as earlier described with some other impedance influencing circuit in the antenna system, but may be constructed as a separate antenna and modulator that are incorporated in the portable unit and therewith solely intended for data communication between the communications units.

Data is transmitted from the unit 3 to the unit 1 by sending a write signal 5' which, in this case, is amplitude modulated with the data to be transferred to the unit 1. The unit 1 captures the thus modulated microwave signal in a detector in its receiver block in a known manner, for intermediate storage of the signal in its memory and possibly for forwarding the signal to a transponder via the signal 5.

## Claims

1. A system for the wireless transmission of information between at least two communications units (1,3) provided with microwave transmitters, **characterized in that** at least one of the units (1) in a first state of operation is arranged to serve as a passive transponder functioning as information delivering communications unit (1) and is operable to modulate a microwave signal (5) incident from the other communication unit (3) functioning as information receiving communications unit (3), on the basis of the data stream to be delivered and thus forming and delivering information sidebands (6) on one or both sides of said microwave signal (5), said data stream having been received earlier from a transponder by the at least one unit (1) in a second state of operation, and where the information receiving communications unit (1) is operable to receive said information sidebands and recreate the delivered data stream by mixing at least one of these information sidebands with the microwave signal (5) and further **characterized in that** said at least one of said communications units (1) in said second state of operation is arranged to function as information receiving communications unit (1) operable to receive information sidebands from a wireless transponder (2), where said transponder (2) includes modulation circuits (11) which, on the basis of a data stream delivered from the transponder (2), causes information sidebands (6) to be formed and delivered on one or both sides of the microwave signal (5) incident from the communications unit (1), and where the information receiving communications unit (1) is operable to receive said information sidebands and recreate the data stream delivered from the transponder (2) by mixing at least one of said information sidebands with the microwave signal (5).

2. A system according to claim 1, **characterized in that** some of the communications units (1) are portable and provided with their own power supply.

## Patentansprüche

1. System für die drahtlose Übertragung von Informationen zwischen mindestens zwei mit Mikrowellensendern versehenen Kommunikationseinheiten (1, 3), **dadurch gekennzeichnet, dass** mindestens eine der genannten Einheiten (1) in einem ersten Betriebszustand so ausgestattet ist, dass sie als ein als informationsempfangende Kommunilcationseinheit (1) funktionierender passiver Transponder fungiert und so funktioniert, dass sie auf der Basis des abzugebenden Datenstroms ein Mikrowellensignal (5) moduliert, das von der als informationsempfangende Kommunikationseinheit (3) dienenden anderen Kommunikationseinheit (3) eingeht, und somit auf einer oder beiden Seiten des genannten Mikrowellensignals (5) Informations-Seitenbänder (6) ausbildet und abgibt, wobei der genannte Datenstrom zuvor in einem zweiten Betriebszustand von einem Transponder über die mindestens eine Einheit erhalten wurde und wobei die informationsempfangende Kommunikationseinheit (1) so funktioniert, dass sie die genannten Infbrmations-Seitenbänder empfängt und den gelieferten Datenstrom neu schafft, indem sie mindestens eines der genannten Informations-Seitcnbänder mit dem Mikrowellensignal (5) mischt, und weiter **dadurch gekennzeichnet, dass** die genannte mindestens eine der Kommunikationscinheiten (1) in dem genannten zweiten Betriebszustand so funktioniert, dass sie als informationsempfangende Kommunikationseinheit (1) fungiert, um Informations-Seitenbänder von einem drahtlosen Transponder (2) zu erhalten, wobei der genannte Transponder (2) Modulationssehaltkreise (11) enthält, welche aufgrund des von dem Transponder (2) gelieferten Datenstroms bewirken, dass auf einer oder beiden Seiten des von der Kommunikationseinheit (1) eingehenden Mikrowellensignals (5) Informations-Seitenbänder (6) ausgebildet und abgegeben werden, und wobei die informationsempfangende Kommunikationseinheit (1) so funktioniert, dass sie die genannten Informations-Seitenbänder empfängt und den von dem Transponder (2) gelieferten Datenstrom neu schafft, indem sie mindestens eines der genannten Informations-Seitenbänder mit dem Mikrowellensignal (5) mischt,

2. System nach Anspruch 1, **dadurch gekennzeichnet, dass** einige der Kommunikationseinheiten (1) portabel sind und mit einer eigenen Stromquelle ausgestattet sind.

## Revendications

1. Système de transmission sans fil d'informations entre au moins deux unités de communication (1, 3) équipé d'émetteurs ultrafréquences,
**caractérisé en ce qu'**
au moins l'une des unités (1) dans un premier état de fonctionnement est réalisée pour servir de transpondeur passif fonctionnant comme unité de communication (1) distribuant des informations, à fonctionnement audio, pour moduler un signal hyperfréquence (5) incident venant de l'autre unité de communication (3) fonctionnant comme unité de communication recevant des informations (3), sur la base du flux de données à distribuer et ainsi formant et délivrant des bandes latérales d'informations (6) sur un côté ou les deux côtés du signal hyperfréquence (5), ce flux de données ayant été reçu antérieurement d'un transpondeur par au moins une unité (1) dans un second état de fonctionnement et
l'unité de communication (1) recevant l'information et fonctionne pour recevoir les bandes latérales d'informations recrée le flux de données délivré en mélangeant au moins l'une des bandes latérales d'informations au signal hyperfréquence (5), et en outre, **caractérisée en ce que** dans au moins l'une des unités de communication (1) dans le second état de fonctionnement, fonctionnant comme unité de communication (1) recevant l'information, reçoit les bandes latérales d'informations d'un transpondeur sans fil (2),
le transpondeur (2) ayant des circuits de modulation (11) qui, sur le fondement du flux de données distribué par le transpondeur (2), met en forme et délivre les bandes latérales d'informations (6) sur un ou les deux côtés du signal hyperfréquence (5), incident, venant de l'unité de communication (1) et l'unité de communication (1) recevant l'information reçoit les bandes latérales d'informations et recrée le flux de données délivré par le transpondeur (2) en mélangeant au moins l'une des bandes latérales d'informations au signal hyperfréquence (5).

2. Système selon la revendication 1,
**caractérisé en ce que**
certaines des unités de communication (1) sont portables et ont leur propre source d'alimentation.
